(19) **Europäisches Patentamt / European Patent Office / Office européen des brevets**

(11) **EP 2 799 899 B1**

(12) **FASCICULE DE BREVET EUROPEEN**

(45) Date de publication et mention
de la délivrance du brevet:
**14.06.2017 Bulletin 2017/24**

(51) Int Cl.:
**G01S 7/40** *(2006.01)* **G01K 11/26** *(2006.01)*
**G01S 13/75** *(2006.01)*

(21) Numéro de dépôt: **14165722.1**

(22) Date de dépôt: **24.04.2014**

(54) **Système d'interrogation d'un capteur passif interrogeable à distance intégré dans une cavité métallique à bilan de liaison amélioré et procédé d'interrogation**

Abfragesystem eines passiven Sensors mit Fernabfragesystem, das in einen Metallhohlraum mit verbesserter Verbindungsbilanz eingebaut ist, und entsprechendes Abfrageverfahren

System for querying a passive sensor capable of being queried remotely in a metal recess with improved link budget and querying method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2013 FR 1353938**

(43) Date de publication de la demande:
**05.11.2014 Bulletin 2014/45**

(73) Titulaire: **Senseor**
**06560 Valbonne (FR)**

(72) Inventeurs:
• **Chommeloux, Luc**
**06110 Le Cannet (FR)**
• **Friedt, Jean-Michel**
**25000 Besancon (FR)**
• **Droit, Christophe**
**70190 Boult (FR)**
• **Masson, Jérémy**
**25720 Avanne-Aveney (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**EP-A1- 0 598 624    EP-A2- 0 179 591**
**US-A- 5 793 305    US-A1- 2006 219 705**

• **REINDL L ET AL: "Wireless measurement of temperature using surface acoustic waves sensors", PROCEEDINGS OF THE 2003 IEEE INTERNATIONAL FREQUENCY CONTROL SYMPOSIUM & PDA EXHIBITION JOINTLY WITH THE 17TH. EUROPEAN FREQUENCY AND TIME FORUM. TAMPA, FL, MAY 4 - 8, 2003; [IEEE INTERNATIONAL FREQUENCY CONTROL SYMPOSIUM], NEW YORK, NY : IEEE, US, 4 mai 2003 (2003-05-04), pages 935-941, XP010688919, DOI: 10.1109/FREQ.2003.1275216 ISBN: 978-0-7803-7688-5**
• **BUFF W ET AL: "Universal pressure and temperature SAW sensor for wireless applications", ULTRASONICS SYMPOSIUM, 1997. PROCEEDINGS., 1997 IEEE TORONTO, ONT., CANADA 5-8 OCT. 1997, NEW YORK, NY, USA,IEEE, US, vol. 1, 5 octobre 1997 (1997-10-05), pages 359-362, XP010271311, DOI: 10.1109/ULTSYM.1997.663039 ISBN: 978-0-7803-4153-1**

**Description**

Le domaine de l'invention est celui des capteurs passifs interrogeables à distance et notamment des capteurs de température, à base de résonateurs à ondes acoustiques de surface ou de volume, pouvant être intégrés dans tout type de cavité généralement, par exemple un four, un autoclave,...

Il est par exemple décrit dans l'article de REINDL ET AL. « Wireless measurement of temperature using surface acoustic waves sensors », PROCEEDINGS of The 2003 IEEE INTERNATIONAL FREQUENCY CONTROL SYMPOSIUM & PDA EXHIBITION JOINTLY WITH THE 17TH.EUROPEAN FREQUENCY AND TIME FORUM.TAMPA, FL, MAY 4-8, 2003, NEW YORK, NY : IEEE, 4 mai 2003, pages 935-941, XP010688919, DOI : 10.1109/FREQ.2003.12752816ISBN 978-0-7688-5, une cavité réfléchissante pour les ondes RF comportant au moins un capteur à ondes acoustiques couplé à une antenne et un dispositif d'interrogation/réception dudit capteur.

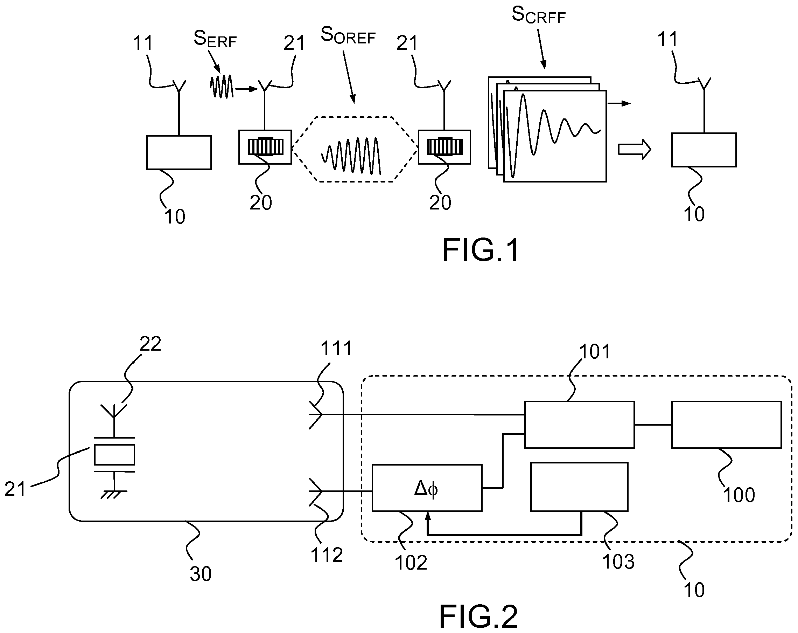

Généralement, de tels capteurs se composent d'une unité d'interrogation (constituée elle-même d'une partie émettrice et d'une partie réceptrice) et d'un capteur de température à ondes acoustiques de surface désigné couramment sous le nom SAW (acronyme anglais pour surface acoustic wave). Le système d'interrogation ainsi que le capteur SAW sont munis d'une antenne adaptée à la bande de fréquence de travail (bande ISM 433 MHz, 868 MHz, 2.45 GHz,...) ce qui permet d'effectuer une interrogation sans fil du capteur. La figure 1 schématise un tel type de capteur interrogeable à distance. Une unité d'interrogation/réception 10, muni d'une antenne 11 génère un signal d'interrogation $S_{ERF}$ en direction d'un capteur SAW 20 également équipé d'une antenne 21 (impulsion temporelle basse fréquence d'une porteuse dans la bande ISM). Le dispositif SAW peut avantageusement être de type résonateur ce qui permet d'accéder à des structures de taille réduite.

Si le signal d'émission $S_{ERF}$ présente une fréquence suffisamment proche de la fréquence de résonance propre du résonateur SAW, ce dernier entre en résonance en passant par une période de charge. Il s'établit alors un régime permanent d'oscillation $S_{OREF}$ à la fréquence de résonance propre du dispositif SAW. Cette fréquence de résonance est proportionnelle à la vitesse de l'onde de surface dans la cavité résonante qui dépend elle-même de la température à laquelle est le résonateur.

Le capteur réémet un signal $S_{CREF}$ à sa fréquence de résonance qui porte l'information liée à la grandeur à mesurer, par exemple la température.

L'unité d'émission/réception du système d'interrogation détecte en dehors de la plage temporelle d'émission tout ou partie du signal SAW (oscillation amortie) et en extrait l'information recherchée, par exemple la température, via un traitement du signal adapté.

Typiquement, le résonateur peut être composé d'un transducteur à peignes inter-digités, constitué d'une alternance d'électrodes de largeurs qui se répètent avec une certaine périodicité appelée période acoustique déposées sur un substrat piézoélectrique pouvant avantageusement être du quartz. Les électrodes, avantageusement en aluminium (réalisées par un procédé de photolithographie) présentent une faible épaisseur devant la période acoustique (typiquement, quelques centaines de nanomètres à quelques micromètres). Par exemple pour un capteur fonctionnant à 433 MHz, l'épaisseur de métal (aluminium) utilisée peut être de l'ordre de 1000 Angströms, la période acoustique et la largeur d'électrode pouvant être respectivement de l'ordre de 3,5 $\mu$m et 2,5 $\mu$m.

Un des ports du transducteur est par exemple relié à une antenne Radio Fréquence (RF) et l'autre à la masse. Les lignes de champ ainsi créées entre deux électrodes de polarités différentes donnent naissance à des ondes élastiques de surface dans la zone de recouvrement des électrodes.

Le transducteur est une structure bidirectionnelle, c'est-à-dire que l'énergie rayonnée vers la droite et l'énergie rayonnée vers la gauche ont la même intensité. En disposant de part et d'autre du transducteur des électrodes, celles-ci jouant le rôle de réflecteur, on réalise un résonateur, chaque réflecteur réfléchissant partiellement l'énergie émise par le transducteur.

Si l'on multiplie le nombre de réflecteurs, on crée une cavité résonante caractérisée par une certaine fréquence de résonance. Cette fréquence dépend en premier lieu de la vitesse de propagation des ondes sous le réseau, celle-ci dépendant principalement de l'état physique du substrat, et donc sensible par exemple à la température. Dans ce cas, c'est le paramètre qui est mesuré par le système d'interrogation et c'est à partir de cette mesure qu'une température peut être calculée.

On rappelle que la variation de la fréquence de résonance d'un résonateur sur quartz est déterminée par la formule suivante :

$$f(T) = f_0 \left[ 1 + CTF_1 (T-T_0) + CTF_2 (T-T_0)^2 \right] \qquad (1)$$

avec $f_0$ la fréquence à $T_0$, $T_0$ la température de référence (25 °C par convention), CTF1 le coefficient de température en fréquence du premier ordre (ppm/°C) et CTF2 le coefficient de température en fréquence du second ordre (ppb/°C$^2$).

On peut également, reformuler cette loi en faisant apparaître une température d'inversion de la loi (1), dite de turn-over :

$$f\,(T) = f_{Tt} + f_0\, CTF_2\, (\,T\text{-}T_{\text{turn-over}}\,)^{\,2} \quad (2)$$

avec $f_{Tt}$ la fréquence à la température de turn-over et T turn-over la température de turn-over ;

Ces grandeurs sont données par les équations suivantes :

$$T_{\text{turn-over}} = T0 - CTF_1\,/2CTF_2$$
$$f_{Tt} = f_0\,[\,1 - CTF_1^{\,2}\,/\,4CTF_2\,] \quad (3)$$

La loi de variation de la fréquence de résonance en fonction de la température est donc une parabole ; la température à laquelle la fréquence est maximum (sommet de la parabole) est appelée température d'inversion.

Il peut être particulièrement intéressant d'utiliser deux résonateurs SAW (W. Buff et al., "Universal pressure and temperature SAW sensor for wireless applications" 1997 IEEE Ultra. Symp. Proc.), inclinés l'un par rapport à l'autre comme illustré en figure 1. Dans ce cas, un premier résonateur $R_1$ pour lequel la direction de propagation des ondes de surface est selon une direction X correspondant à un des axes cristallographiques du substrat cristallin, est couplé à un second résonateur $R_2$, incliné d'un certain angle $\alpha$ (pouvant typiquement être de l'ordre de 20°) par rapport à l'axe X, et utilisant donc une autre direction de propagation.

L'intérêt de tels capteurs passifs de température réside dans le fait qu'ils puissent être interrogés à distance et donc qu'il est possible de déporter l'unité d'interrogation et de traitement en dehors de l'enceinte chauffante type four, autoclave, ..., dans laquelle est placé le capteur passif, seule l'antenne d'émission/réception équivalente de l'antenne 11 illustrée en figure 1, étant placée dans ladite enceinte.

Néanmoins, le signal RF devient source de réflexions multiples d'énergie dans l'enceinte métallique, générant une distribution spatiale de l'énergie RF, dépendante de la taille et de la forme de l'enceinte dans laquelle est placé le capteur passif, et dépendante également d'éléments vus comme des obstacles qui pourraient être également placés à l'intérieur de ladite enceinte.

La distribution spatiale d'énergie présente alors des minima et des maxima de valeurs de puissance. Si le capteur est positionné à proximité d'une valeur minimale, il peut devenir impossible d'interroger ledit capteur à distance. On cherchera néanmoins à optimiser le bilan énergétique et optimiser le procédé d'interrogation.

Il est envisageable, de positionner précisément et l'antenne d'émission et le capteur dans l'enceinte afin de se trouver dans une configuration optimale en tenant compte des paramètres précités et notamment de la taille et de la forme de la cavité.

A chaque configuration, il est cependant nécessaire de procéder à un bilan énergétique et à un positionnement adapté dudit capteur, ce problème devenant encore plus aigu en présence de plusieurs capteurs.

C'est pourquoi et pour résoudre le problème précité, la présente invention a pour objet un nouveau système permettant l'interrogation à distance d'un capteur passif utilisant un nombre d'antennes d'émission au moins supérieur ou égal à 2, lesdites antennes d'émission étant réglées pour générer un bilan énergétique au niveau du capteur passif suffisant pour permettre une interrogation dudit capteur et ce quelle que soit la configuration du capteur dans la cavité dans laquelle il se trouve.

Plus précisément, la présente invention a pour objet un système comprenant :

- une cavité réfléchissante pour les ondes RF et comportant au moins un capteur à ondes élastiques présentant une bande de fréquence de résonance, couplé à une antenne dite de capteur et ;
- un dispositif d'interrogation/réception, dudit capteur caractérisé en ce que ledit dispositif d'interrogation/réception comporte :

  ◦ des moyens d'émission/réception d'un signal RF émettant dans une bande de fréquence d'interrogation comprenant ladite bande de fréquence de résonance dudit capteur ;
  ◦ au moins une première antenne d'émission/réception et une seconde antenne d'émission/réception, positionnées dans ladite cavité ;
  ◦ des moyens pour diviser ledit signal en au moins un premier signal RF et un second signal RF, ledit premier signal étant transmis à ladite première antenne d'émission/réception et ledit second signal étant transmis à ladite seconde antenne d'émission/réception ;
  ◦ des moyens pour créer un déphasage entre ledit premier signal RF et ledit second signal RF ;

◦ des moyens d'analyse du niveau de puissance du signal reçu.

En effet comme il sera développé dans la description ci-après, le Demandeur a mis en évidence, qu'il était possible de déplacer spatialement les maxima et minima d'énergie générés dans la cavité en modulant le déphasage imposé entre la première et la seconde antenne d'émission/réception, permettant par là même de faire coïncider les maxima d'énergie avec une position déterminée du capteur dans la cavité.

Selon une variante de l'invention, ledit capteur comprend au moins un résonateur à ondes élastiques de surface.

Selon une variante de l'invention, le capteur comprend au moins deux résonateurs à ondes élastiques de surface, le système étant apte à mesurer une température.

Selon une variante de l'invention, le système comprend N capteurs positionnés dans ladite cavité, ladite cavité comprenant au moins deux antennes d'émission/réception, les moyens pour diviser le signal RF pouvant diviser ledit signal RF en au moins deux signaux élémentaires.

Selon une variante de l'invention, les moyens d'émission comprennent des moyens pour balayer en fréquence le signal RF.

Selon une variante de l'invention, les moyens pour faire varier la phase comprennent un microcontrôleur.

Selon une variante de l'invention, le système comprend :

- des moyens automatiques de balayage en déphasage sur une plage de valeurs de déphasage, pouvant être de 0° à 360° ;
- des moyens d'enregistrement du niveau de puissance du signal reçu afin de déterminer un déphasage optimal ou permettant un niveau de puissance du signal reçu suffisant ;
- des moyens automatiques pour appliquer ledit déphasage.

L'invention a aussi pour objet un procédé d'interrogation d'un capteur à ondes élastiques intégré dans une cavité réfléchissante pour les ondes RF, ledit capteur à ondes élastiques présentant une bande de fréquence de résonance et étant couplé à une antenne dite de capteur, ladite cavité comprenant au moins une première antenne d'émission/réception et une seconde antenne d'émission/réception caractérisé en ce qu'il comprend :

- l'émission d'un signal RF d'interrogation émettant dans une bande de fréquence d'interrogation comprenant ladite bande de fréquence de résonance dudit capteur ;
- la division dudit signal RF en au moins un premier signal RF d'émission et un second signal RF d'émission ;
- la génération d'un déphasage par des procédés numériques ou analogiques entre ledit premier signal RF et ledit second signal RF de manière à régler spatialement les maxima d'énergie électromagnétique du champ d'interrogation dans ladite cavité par l'interférence desdits premier et second signaux déphasés ;
- la détection d'un signal RF de réponse renvoyé par ledit capteur.

Selon une variante de l'invention, le procédé d'interrogation comprend une série d'émissions successives d'un signal RF balayé en fréquence dans une bande de fréquence comprenant la fréquence de résonance dudit capteur.

Selon une variante de l'invention, la génération du déphasage entre ledit premier signal RF et ledit second signal RF est effectué de manière croissante jusqu'à détection d'un signal de réponse.

Selon une variante de l'invention, le procédé d'interrogation comprend :

- une étape préalable de détermination du niveau de puissance du signal reçu en fonction du déphasage imposé sur une plage de valeurs pouvant être entre 0° et 360°, permettant de définir un déphasage optimal ;
- l'application dudit déphasage optimal entre ledit premier signal RF et ledit second signal RF.

Selon une variante de l'invention, le capteur comportant au moins un premier résonateur présentant au moins une première fréquence de résonance et un second résonateur présentant au moins une seconde fréquence de résonance, il comprend :

- une première série d'émissions successives dans une première bande de fréquence comprenant ladite première fréquence de résonance et la génération d'un premier déphasage entre ledit premier signal RF et ledit second signal RF ;
- une seconde série d'émissions successives dans une seconde bande de fréquence comprenant ladite seconde fréquence de résonance et la génération d'un second déphasage entre ledit premier signal RF et ledit second signal RF.

L'invention sera mieux comprise et d'autres avantages apparaîtront à la lecture de la description qui va suivre donnée à titre non limitatif et grâce aux figures annexées parmi lesquelles :

- la figure 1 illustre un système d'interrogation /réception d'un capteur passif de type SAW selon l'art antérieur ;
- la figure 2 illustre un système selon la présente invention comprenant l'interrogation d'un capteur passif de type SAW placé dans une cavité équipée de deux antennes d'émission/réception ;
- les figures 3a, 3b et 3c illustrent l'intensité du champ électromagnétique perçu par un capteur de type SAW placé en espace libre en fonction de différents déphasages imposés entre le premier signal RF et le second signal RF ;
- les figures 4a et 4b illustrent le rapport de la puissance détectée/la puissance maximale mesurable pour différents déphasages imposés entre le premier signal et le second signal, dans le cas d'un système comprenant un capteur SAW présentant deux fréquences de résonance et placé en deux positions distinctes de la cavité.

Selon la présente invention, un capteur passif à ondes de surface que l'on cherche à interroger à distance est placé dans une cavité typiquement métallique, générant des réflexions multiples lorsqu'un signal d'interrogation RF est envoyé pour interroger la réponse dudit capteur, ledit capteur présentant une position donnée dans ladite cavité.

La figure 2 illustre ainsi un exemple de cavité 30 dans laquelle est placé un capteur SAW 21, connecté d'une part à la masse et d'autre part à une antenne dite de capteur 22.

Le dispositif d'interrogation/réception à distance 10, du capteur passif 21, comprend des moyens d'émission et de détection 100 d'un signal RF à une fréquence d'émission que l'on fait varier dans une bande de fréquence dans laquelle se situe la fréquence de résonance du capteur SAW.

Le signal RF ainsi généré est divisé en deux parties, via un diviseur 101, de manière à créer un premier signal RF d'interrogation et un second signal RF d'interrogation. Selon la présente invention, il est prévu un déphaseur 102 commandé par une unité 103 capable de régler le déphasage $\Delta\Phi$ entre ledit premier signal et ledit second signal RF d'interrogation.

Le premier signal d'interrogation est introduit dans la cavité via une première antenne d'émission/réception 111, le second signal d'interrogation étant introduit dans la cavité via une seconde antenne d'émission/réception 112. Les deux signaux d'interrogation interfèrent dans la cavité et permettent ainsi de régler spatialement les maxima d'énergie électromagnétique du champ d'interrogation dans la cavité.

Il est plus précisément prévu pour cela un déphaseur 102 agissant sur le second signal d'interrogation commandé par une unité de commande 103 destinée à faire varier la valeur du déphasage imposé.

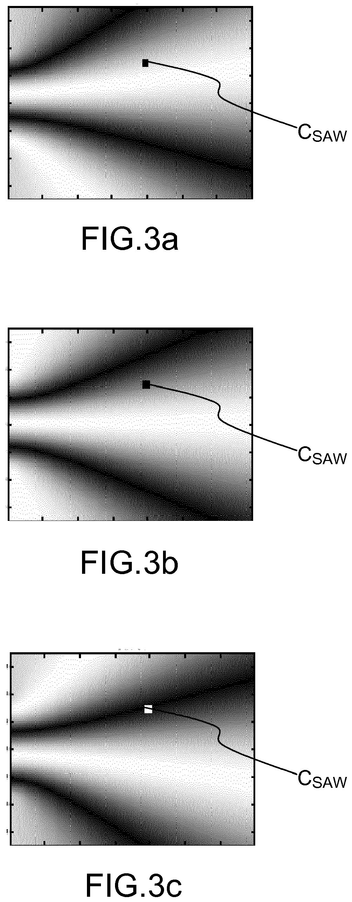

Les figures 3a, 3b et 3c illustrent l'évolution de l'intensité du champ électromagnétique en espace libre lorsque les deux antennes d'émission/réception sont séparées par exemple (mais non de manière limitative) par une longueur d'onde, le capteur SAW étant positionné et repéré dans le repère X,Y par le carré : $C_{SAW}$.

Plus précisément, la figure 3a est relative à un déphasage imposé de - 60°, la figure 3b est relative à un déphasage imposé de 0° et la figure 3c est relative à un déphasage imposé de + 60°.

La couleur noire illustre un minimum d'énergie RF, alors que la couleur blanche illustre un maximum d'énergie RF.

Ainsi selon la position précise du capteur SAW dans cette cavité, il apparait qu'un déphasage de - 60 °, permet d'interroger avec un très bon bilan énergétique ledit capteur, alors que sans déphasage, ce bilan énergétique serait bien inférieur, voire très mauvais avec un déphasage de + 60°.

Exemple de réalisation d'un système de l'invention comprenant un capteur de température placé dans une cavité métallique.

Le capteur de température de type SAW est placé dans une cavité métallique pouvant être une enceinte chauffante, ledit capteur comprend un premier résonateur et un second résonateur présentant respectivement :

- une première fréquence de résonance située dans une première bande de fréquences : 433- 434 MHz ;
- une seconde fréquence de résonance située dans une seconde bande de fréquences : 434- 435 MHz

L'interrogation du capteur est réalisée dans un premier temps par un balayage en fréquences de la bande 433 - 434 MHz, on enregistre le signal RF de réception par rapport au signal RF émis via les deux antennes.

L'interrogation du capteur est également réalisée dans un second temps par un balayage en fréquences de la bande 434 - 435 MHz, on enregistre le signal RF de réception par rapport au signal RF émis via les deux antennes.

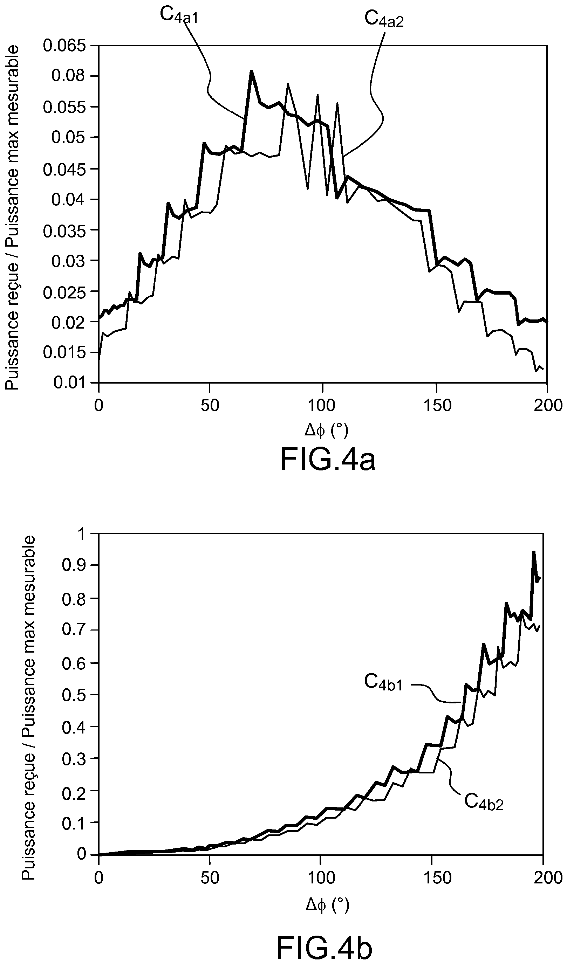

Les figures 4a et 4b illustrent respectivement pour une première position et pour une seconde position du capteur dans l'enceinte, l'évolution du rapport de la puissance de signal détecté/ la puissance maximale mesurable illustrant le bilan de liaison, en fonction du déphasage imposé entre les deux signaux d'interrogation et ce lors du balayage en fréquence dans la première bande de fréquence et dans la seconde bande de fréquence.

La figure 4a montre un rendement énergétique assez faible, mais très évolutif en fonction du déphasage imposé, passant d'une valeur de 0,015 en valeur normalisée à un maximum de 0,065 et ce de manière dépendante de la fréquence, il est ainsi possible de déterminer un déphasage adapté à chaque résonateur en fonction de sa fréquence de résonance. La courbe $C_{4a1}$ est relative à la fréquence 433,6 MHz, la courbe $C_{4a2}$ étant relative à la fréquence 434,3 MHz.

La figure 4b montre quant à elle, pour une autre position du capteur, qu'il est possible d'obtenir un rendement énergétique proche de la saturation du système de détection également dépendant du déphasage créé entre les signaux émis par les deux antennes. La courbe $C_{4b1}$ est relative à la fréquence 433,6 MHz, la courbe $C_{4b2}$ étant relative à la fréquence 434,3 MHz.

Le système de l'invention peut fonctionner selon différents processus en termes d'identification de déphasage adapté.

Selon une première variante de l'invention, le déphasage peut être manuellement progressivement augmenté jusqu'à obtenir une valeur de signal de réception détectable via l'unité d'émission et de réception, pour une configuration donnée d'un capteur positionné dans une cavité donnée, impliquant de renouveler le réglage pour chaque nouvelle configuration.

Selon une seconde variante de l'invention, le système peut avantageusement comprendre des moyens automatiques, effectuant une augmentation automatique de la phase jusqu'à obtenir une valeur de signal de réception détectable, ou en effectuant dans une première étape un balayage complet sur la gamme de phases autorisées par le système de déphasage utilisé et enregistrant le signal de réception, permettant de définir la valeur optimale de déphasage permettant d'obtenir le bilan de liaison optimal, afin de l'appliquer automatiquement dans une seconde étape.

La présente invention a été décrite dans le cadre d'un capteur et de deux antennes d'émission/réception. Lorsqu'une enceinte comporte plusieurs capteurs par exemple un nombre N de capteurs, il peut avantageusement être prévu d'équiper la cavité comprenant les N capteurs, de N+1 antennes permettant de créer l'ensemble des déphasages qui conviennent et ce dans le cas où les capteurs sont identiques en terme de fréquence de résonance. En effet, dans ce cas on cherche à avoir un degré de liberté supplémentaire pour optimiser la position des maxima et des minima d'énergie pour les différents capteurs, en divisant dans ce cas, le signal d'interrogation RF en N+1 signaux élémentaires.

**Revendications**

1. Système comprenant :

   - une cavité (30) réfléchissante pour les ondes RF et comportant au moins un capteur à ondes élastiques (21) présentant une bande de fréquence de résonance, couplé à une antenne dite de capteur (22) et ;
   - un dispositif d'interrogation/réception, dudit capteur **caractérisé en ce que** ledit dispositif d'interrogation/réception (10) comporte :

      ◦ des moyens d'émission/réception d'un signal RF (100) émettant dans une bande de fréquence d'interrogation comprenant ladite bande de fréquence de résonance dudit capteur ;
      ◦ au moins une première antenne d'émission/réception (111) et une seconde antenne d'émission/réception (112), positionnées dans ladite cavité (30) ;
      ◦ des moyens pour diviser ledit signal en au moins un premier signal RF et un second signal RF (101), ledit premier signal étant transmis à ladite première antenne d'émission/réception et ledit second signal étant transmis à ladite seconde antenne d'émission/réception ;
      ◦ des moyens pour créer un déphasage (102, 103) entre ledit premier signal RF et ledit second signal RF ;
      ◦ des moyens d'analyse du niveau de puissance du signal reçu.

2. Système selon la revendication 1, **caractérisé en ce que** ledit capteur comprend au moins un résonateur à ondes élastiques de surface.

3. Système selon la revendication 2, **caractérisé en ce que** le capteur comprend au moins deux résonateurs à ondes élastiques de surface, le système étant apte à mesurer une température.

4. Système selon l'une des revendications 1 à 3, **caractérisé en ce qu'**il comprend N capteurs positionnés dans ladite cavité, ladite cavité comprenant au moins deux antennes d'émission/réception, les moyens pour diviser le signal RF pouvant diviser ledit signal RF en au moins deux signaux élémentaires.

5. Système selon l'une des revendications 1 à 4, **caractérisé en ce qu'**il comprend les moyens d'émission comprennent des moyens pour balayer en fréquence le signal RF.

**6.** Système selon l'une des revendications 1 à 5, **caractérisé en ce que** les moyens pour faire varier la phase comprennent un microcontrôleur.

**7.** Système selon l'une des revendications 1 à 6, **caractérisé en ce qu'**il comprend :

- des moyens automatiques de balayage en déphasage sur une plage de valeurs de déphasage, pouvant être de 0° à 360° ;
- des moyens d'enregistrement du niveau de puissance du signal reçu afin de déterminer un déphasage optimal ou permettant un niveau de puissance du signal reçu suffisant ;
- des moyens automatiques pour appliquer ledit déphasage.

**8.** Procédé d'interrogation d'un capteur à ondes élastiques intégré dans une cavité réfléchissante pour les ondes RF, ledit capteur à ondes élastiques présentant une bande de fréquence de résonance et étant couplé à une antenne dite de capteur, ladite cavité comprenant au moins une première antenne d'émission/réception (111) et une seconde antenne d'émission/réception (112) **caractérisé en ce qu'**il comprend :

- l'émission d'un signal RF d'interrogation émettant dans une bande de fréquence d'interrogation comprenant ladite bande de fréquence de résonance dudit capteur ;
- la division dudit signal RF en au moins un premier signal RF d'émission et un second signal RF d'émission ;
- la génération d'un déphasage par des procédés numériques ou analogiques entre ledit premier signal RF et ledit second signal RF de manière à régler spatialement les maxima d'énergie électromagnétique du champ d'interrogation dans ladite cavité par l'interférence desdits premier et second signaux déphasés ;
- la détection d'un signal RF de réponse renvoyé par ledit capteur.

**9.** Procédé d'interrogation d'un capteur à ondes élastiques intégré dans une cavité selon la revendication 8, **caractérisé en ce qu'**il comprend une série d'émissions successives d'un signal RF balayé en fréquence dans une bande de fréquence comprenant la fréquence de résonance dudit capteur.

**10.** Procédé d'interrogation d'un capteur à ondes élastiques intégré dans une cavité selon l'une des revendications 8 ou 9, **caractérisé en ce que** la génération du déphasage entre ledit premier signal RF et ledit second signal RF est effectuée de manière croissante jusqu'à détection d'un signal de réponse.

**11.** Procédé d'interrogation d'un capteur à ondes élastiques compris dans une cavité selon l'une des revendications 8 ou 9, **caractérisé en ce qu'**il comprend :

- une étape préalable de détermination du niveau de puissance du signal en fonction du déphasage imposé sur une plage de valeurs, pouvant être situées entre les valeurs 0° et 360°, permettant de définir un déphasage optimal ;
- l'application dudit déphasage entre ledit premier signal RF et ledit second signal RF.

**12.** Procédé d'interrogation d'un capteur à ondes élastiques compris dans une cavité selon l'une des revendications 8 à 11, **caractérisé en ce que** le capteur comprenant au moins un premier résonateur présentant au moins une première fréquence de résonance et un second résonateur présentant au moins une seconde fréquence de résonance, il comprend :

- une première série d'émissions successives dans une première bande de fréquence comprenant ladite première fréquence de résonance et la génération d'un premier déphasage entre ledit premier signal RF et ledit second signal RF ;
- une seconde série d'émissions successives dans une seconde bande de fréquence comprenant ladite seconde fréquence de résonance et la génération d'un second déphasage entre ledit premier signal RF et ledit second signal RF.

**Patentansprüche**

**1.** System, das Folgendes umfasst:

- einen reflektierenden Hohlraum (30) für RF-Wellen, mit wenigstens einem elastischen Wellensensor (21), der ein Resonanzfrequenzband präsentiert, gekoppelt mit einer Sensorantenne (22) genannten Antenne, und
- eine Abfrage-/Empfangsvorrichtung des Sensors, **dadurch gekennzeichnet, dass** die Abfrage-/Empfangsvorrichtung (10) Folgendes umfasst:

- ◦ Mittel zum Senden/Empfangen eines RF-Signals (100), das in einem Abfragefrequenzband gesendet wird, das das Resonanzfrequenzband des Sensors umfasst;
- ◦ wenigstens eine erste Sende-/Empfangsantenne (111) und eine zweite Sende-/Empfangsantenne (112), die in dem Hohlraum (30) positioniert sind;
- ◦ Mittel zum Unterteilen des Signals in wenigstens ein erstes RF-Signal und ein zweites RF-Signal (101), wobei das erste Signal zu der ersten Sende-/Empfangsantenne übertragen wird und das zweite Signal zur zweiten Sende-/Empfangsantenne übertragen wird;
- ◦ Mittel zum Erzeugen einer Phasenverschiebung (102, 103) zwischen dem ersten RF-Signal und dem zweiten RF-Signal;
- ◦ Mittel zum Analysieren des Leistungspegels des empfangenen Signals.

2. System nach Anspruch 1, **dadurch gekennzeichnet, dass** der Sensor wenigstens einen Resonator für elastische Oberflächenwellen umfasst.

3. System nach Anspruch 2, **dadurch gekennzeichnet, dass** der Sensor wenigstens zwei Sensoren für elastische Oberflächenwellen umfasst, wobei das System Temperatur messen kann.

4. System nach einem der Ansprüche 1 bis 3, **dadurch gekennzeichnet, dass** es N in dem Hohlraum positionierte Sensoren umfasst, wobei der Hohlraum wenigstens zwei Sende-/Empfangsantennen umfasst, wobei die Mittel zum Unterteilen des RF-Signals das RF-Signal in wenigstens zwei Elementarsignale unterteilen können.

5. System nach einem der Ansprüche 1 bis 4, **dadurch gekennzeichnet, dass** es Sendemittel umfasst, die Mittel zum Frequenzabtasten des RF-Signals umfassen.

6. System nach einem der Ansprüche 1 bis 5, **dadurch gekennzeichnet, dass** die Mittel zum Variieren der Phase eine Mikrosteuerung umfassen.

7. System nach einem der Ansprüche 1 bis 6, **dadurch gekennzeichnet, dass** es Folgendes umfasst:

- automatische Abtastmittel mit Phasenverschiebung über einen Phasenverschiebungswertebereich, der zwischen 0° und 360° liegen kann;
- Mittel zum Aufzeichnen des Leistungspegels des empfangenen Signals, um eine optimale Phasenverschiebung zu bestimmen oder um einen ausreichenden Leistungspegel des empfangenen Signals zuzulassen;
- automatische Mittel zum Anwenden der Phasenverschiebung.

8. Verfahren zum Abfragen eines Sensors für elastische Wellen, der in einen RF-Wellen reflektierenden Hohlraum integriert ist, wobei der Sensor für elastische Wellen ein Resonanzfrequenzband hat und mit einer Sensorantenne genannten Antenne gekoppelt ist, wobei der Hohlraum wenigstens eine erste Sende-/Empfangsantenne (111) und eine zweite Sende-/Empfangsantenne (112) umfasst, **dadurch gekennzeichnet, dass** es Folgendes beinhaltet:

- Senden eines RF-Abfragesignals, das in einem Abfragefrequenzband sendet, das das Resonanzfrequenzband des Sensors umfasst;
- Unterteilen des RF-Signals in wenigstens ein erstes RF-Sendesignal und ein zweites RF-Sendesignal;
- Erzeugen einer Phasenverschiebung durch digitale oder analoge Verfahren zwischen dem ersten RF-Signal und dem zweiten RF-Signal, um die elektromagnetischen Energiemaxima des Abfragefeldes in dem Hohlraum durch die Interferenz zwischen dem ersten und zweiten phasenverschobenen Signal räumlich zu regeln;
- Erkennen eines von dem Sensor gesendeten RF-Antwortsignals.

9. Verfahren zum Abfragen eines in einen Hohlraum integrierten Sensors für elastische Wellen nach Anspruch 8, **dadurch gekennzeichnet, dass** es eine Serie von aufeinander folgenden Sendungen eines frequenzabgetasteten RF-Signals in einem Frequenzband umfasst, das die Resonanzfrequenz des Sensors umfasst.

10. Verfahren zum Abfragen eines in einen Hohlraum integrierten Sensors für elastische Wellen nach Anspruch 8 oder 9, **dadurch gekennzeichnet, dass** das Erzeugen der Phasenverschiebung zwischen dem ersten RF-Signal und dem zweiten RF-Signal ansteigend bis zur Erkennung eines Antwortsignals erfolgt.

11. Verfahren zum Abfragen eines in einem Hohlraum enthaltenen Sensors für elastische Wellen nach Anspruch 8 oder 9, **dadurch gekennzeichnet, dass** es Folgendes beinhaltet:

- einen Vorabschritt des Bestimmens des Leistungspegels des Signals in Abhängigkeit von der auferlegten Phasenverschiebung auf einem Wertebereich, der zwischen den Werten 0° und 360° liegen kann, so dass eine optimale Phasenverschiebung definiert werden kann;
- Anwenden der Phasenverschiebung zwischen dem ersten RF-Signal und dem zweiten RF-Signal.

12. Verfahren zum Abfragen eines in einem Hohlraum enthaltenen Sensors für elastische Wellen nach einem der Ansprüche 8 bis 11, **dadurch gekennzeichnet, dass** der Sensor wenigstens einen ersten Resonator mit wenigstens einer ersten Resonanzfrequenz und einen zweiten Resonator mit wenigstens einer zweiten Resonanzfrequenz umfasst, wobei es Folgendes beinhaltet:

- eine erste Serie von aufeinander folgenden Sendungen in einem ersten Frequenzband mit der ersten Resonanzfrequenz, und Erzeugen einer ersten Phasenverschiebung zwischen dem ersten RF-Signal und dem zweiten RF-Signal;
- eine zweite Serie von aufeinander folgenden Sendungen in einem zweiten Frequenzband mit der zweiten Resonanzfrequenz, und Erzeugen einer zweiten Phasenverschiebung zwischen dem ersten RF-Signal und dem zweiten RF-Signal.

**Claims**

1. A system comprising:

- a cavity (30) that is reflective for RF waves and comprising at least one elastic wave sensor (21) exhibiting a resonance frequency band coupled to one antenna referred to as the sensor antenna (22) and;
- a device for interrogation/reception of said sensor, **characterised in that** said interrogation/reception device (10) comprises:

 ∘ means for transmitting/receiving an RF signal (100) transmitting within an interrogation frequency band comprising said resonance frequency band of said sensor;
 ∘ at least a first transmission/reception antenna (111) and a second transmission/reception antenna (112) positioned within said cavity (30);
 ∘ means for dividing said signal into at least a first RF signal and a second RF signal (101), said first signal being transmitted to said first transmission/reception antenna and said second signal being transmitted to said second transmission/reception antenna;
 ∘ means for creating a phase-shift (102, 103) between said first RF signal and said second RF signal;
 ∘ means for analysing the power level of the received signal.

2. The system according to Claim 1, **characterised in that** said sensor comprises at least one surface elastic wave resonator.

3. The system according to Claim 2, **characterised in that** the sensor comprises at least two surface elastic wave resonators, the system being able to measure a temperature.

4. The system according to any of Claims 1 to 3, **characterised in that** it comprises N sensors positioned within said cavity, said cavity comprising at least two transmission /reception antennas, the means for dividing the RF signal being capable of dividing said RF signal into at least two elementary signals.

5. The system according to any of Claims 1 to 4, **characterised in that** the transmission means comprise means for scanning the RF signal frequency.

6. The system according to any of Claims 1 to 5, **characterised in that** the means for varying the phase comprise a microcontroller.

7. The system according to any of Claims 1 to 6, **characterised in that** it comprises:

- automatic means for scanning in phase-shift over a range of values of phase-shift which can be from 0° to 360°;
- means for recording the power level of the received signal in order to determine a phase-shift that is optimal or that allows a sufficient power level for the received signal;
- automatic means for applying said phase-shift.

8. A method for interrogating an elastic wave sensor integrated into a cavity that is reflective for RF waves, said elastic wave sensor exhibiting a resonance frequency band and being coupled to one antenna referred to as the sensor antenna, said cavity comprising at least a first transmission/reception antenna (111) and a second transmission/reception antenna (112), **characterised in that** it comprises:

- the transmission of an RF interrogation signal transmitting within an interrogation frequency band comprising said resonance frequency band of said sensor;
- the division of said RF signal into at least a first RF transmission signal and a second RF transmission signal;
- the generation of a phase-shift by digital or analogue methods between said first RF signal and said second RF signal in such a manner as to spatially adjust the maxima of electromagnetic energy of the interrogation field within said cavity by the interference of said phase-shifted first and second signals;
- the detection of an RF response signal returned by said sensor.

9. The method for interrogating an elastic wave sensor integrated into a cavity according to Claim 8, **characterised in that** it comprises a series of successive transmissions of an RF signal scanned in frequency within a frequency band comprising the resonance frequency of said sensor.

10. The method for interrogating an elastic wave sensor integrated into a cavity according to either of Claims 8 or 9, **characterised in that** the generation of the phase-shift between said first RF signal and said second RF signal is carried out in an increasing meaner until a response signal is detected.

11. The method for interrogating an elastic wave sensor included within a cavity according to either of Claims 8 or 9, **characterised in that** it comprises:

- an initial step for determining the power level of the signal as a function of the phase-shift imposed over a range of values, which can be situated between the values of 0° and 360°, allowing an optimum phase-shift to be defined;
- the application of said phase-shift between said first RF signal and said second RF signal.

12. The method for interrogating an elastic wave sensor included within a cavity according to any of Claims 8 to 11, **characterised in that** the sensor comprising at least a first resonator exhibiting at least a first resonance frequency and a second resonator exhibiting at least a second resonance frequency, it further comprises:

- a first series of successive transmissions within a first frequency band comprising said first resonance frequency and the generation of a first phase-shift between said first RF signal and said second RF signal;
- a second series of successive transmissions within a second frequency band comprising said second resonance frequency and the generation of a second phase-shift between said first RF signal and said second RF signal

FIG.1

FIG.2

EP 2 799 899 B1

FIG.3a

FIG.3b

FIG.3c

FIG.4a

FIG.4b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Wireless measurement of temperature using surface acoustic waves sensors. **REINDL ET.** PROCEEDINGS of The 2003 IEEE INTERNATIONAL FREQUENCY CONTROL SYMPOSIUM & PDA EXHIBITION JOINTLY WITH THE 17TH.EUROPEAN FREQUENCY AND TIME FORUM.TAMPA, FL, MAY 4-8, 2003. IEEE, 04 Mai 2003, 935-941

- **W. BUFF et al.** Universal pressure and temperature SAW sensor for wireless applications. *IEEE Ultra. Symp. Proc.,* 1997